# EUROPEAN PATENT APPLICATION

(11) **EP 3 930 036 A1**
(43) Date of publication of application: **29.12.2021**
(21) Application number: 20182352.3
(22) Date of filing: 25.06.2020
(51) Int. Cl.: H01M 4/04, H01M 4/131, H01M 4/1391, H01M 4/36, H01M 4/525, H01M 10/0525, H01M 10/0562, C01G 53/00

(54) **ALL-SOLID-STATE LITHIUM ION ELECTROCHEMICAL CELLS AND THEIR MANUFACTURE**

(71) Applicant: BASF SE, 67056 Ludwigshafen am Rhein (DE); Karlsruher Institut für Technologie, 76131 Karlsruhe (DE)
(72) Inventor: BIANCHINI, Matteo, 76149 Karlsruhe (DE); HARTMANN, Pascal, 67069 Ludwigshafen am Rhein (DE); WU, Xiaochan, 67063 Ludwighafen am Rhein (DE); BREZESINSKI, Torsten, 76149 Karlsruhe (DE); MA, Yuan, 76131 Karlsruhe (DE)
(74) Representative: BASF IP Association

(57) **Abstract**

All-solid-state lithium-ion electrochemical cells comprising
(A) a cathode comprising
(a) particulate electrode active material according to general formula Li₁₊ₓTM₁₋ₓO₂, wherein TM is Ni and, optionally, at least one of Co and Mn, and, optionally, at least one element selected from Al, Mg, and Ba, transition metals other than Ni, Co, and Mn, and x is in the range of from zero to 0.2, wherein at least 50 mole-% of the transition metal of TM is Ni, wherein said electrode active material is at least partially coated with a nanoparticulate zirconia or titania or hafnium oxide or alumina or niobium oxide or gallium oxide or tungsten oxide or molybdenum oxide species and wherein said particulate electrode active material has an average particle diameter (D50) in the range of from 2 to 20 µm,

(B) an anode, and
(C) a solid electrolyte comprising lithium, sulphur and phosphorus.

## Description

The present invention is directed to all-solid-state lithium-ion electrochemical cells comprising
(A) a cathode comprising
   (a) a particulate electrode active material according to general formula Li₁₊ₓTM₁₋ₓO₂, wherein TM is Ni and, optionally, at least one of Co and Mn, and, optionally, at least one element selected from Al, Mg, and Ba, transition metals other than Ni, Co, and Mn, and x is in the range of from zero to 0.2, wherein at least 50 mole-% of the transition metal of TM is Ni, wherein said electrode active material is at least partially coated with a nanoparticulate zirconia or titania or hafnium oxide or alumina or niobium oxide or gallium oxide or tungsten oxide or molybdenum oxide species and wherein said particulate electrode active material has an average particle diameter (D50) in the range of from 2 to 20 µm,
(B) an anode, and
(C) a solid electrolyte comprising lithium, sulphur and phosphorus.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

One problem of lithium ion batteries lies in undesired reactions on the surface of the cathode active materials. Such reactions may be a decomposition of the electrolyte or the solvent or both. It has thus been tried to protect the surface without hindering the lithium ion exchange during charging and discharging. Examples are attempts to coat the surface of the cathode active materials with, e.g., aluminium oxide or calcium oxide, see, e.g., US 8,993,051.

Another attempt to resolve the above problem is by using all-solid-state lithium-ion electrochemical cells, also called solid state lithium-ion cells. In such all-solid-state lithium-ion electrochemical cells, an electrolyte that is solid at ambient temperature is used. As electrolytes, certain materials based on lithium, sulphur and phosphorus have been recommended. However, side reactions of the electrolyte are still not excluded.

It has, on the other hand, also been reported that solid electrolytes based on lithium, sulphur and phosphorus may be incompatible with a nickel-containing complex layered oxide cathode material or other metal oxide cathode material when in direct contact with such cathode material, thereby impeding reversible operation of a respective solid-state or all solid-state lithium-ion electrochemical cell (battery) in certain cases. Several attempts have therefore been made to avoid direct contact between a nickel-containing layered oxide cathode material or other metal oxide cathode material and a respective solid electrolyte, e.g. by covering the oxidic cathode material on its surface with a shell or coating of certain materials, thus aiming at obtaining high oxidative stability and at the same time high lithium-ion conductivity of the oxidic cathode material and to so achieve or improve stable cycling performance of a solid-state or all solid-state lithium-ion electrochemical cell comprising said aforementioned components.

It was therefore an objective of the present invention to provide a lithium-ion electrochemical cell that overcomes the disadvantages of the prior art systems, and it was an objective to provide a process for manufacture of such lithium-ion electrochemical cells.

Accordingly, the all-solid-state lithium-ion electrochemical cells as defined at the outset have been found, hereinafter also defined as inventive electrochemical cells. In the context of the present invention, the terms all-solid-state lithium-ion electrochemical cells and solid-state lithium-ion electrochemical cells will be used interchangeably.

Inventive electrochemical cells comprise a cathode (A) and an anode (B) and a solid electrolyte (C), each of them being described in more detail below.

Cathode (A) comprises
(a) a particulate electrode active material according to general formula Li₁₊ₓTM₁₋ₓO₂, wherein TM is Ni and, optionally, at least one of Co and Mn, and, optionally, at least one element selected from Al, Mg, and Ba, transition metals other than Ni, Co, and Mn, and x is in the range of from zero to 0.2, preferably 0.005 to 0.05, wherein at least 50 mole-% of the transition metal of TM is Ni, wherein said electrode active material is at least partially coated with a nanoparticulate zirconia or titania or hafnium oxide or alumina or niobium oxide or gallium oxide or tungsten oxide or molybdenum oxide species and wherein said particulate electrode active material has an average particle diameter (D50) in the range of from 2 to 20 µm.

Particulate electrode active material according to general formula Li₁₊ₓTM₁₋ₓO₂ may be selected from lithiated nickel-cobalt aluminum oxides, lithiated nickel-manganese oxides, and lithiated layered nickel-cobalt-manganese oxides. Examples of layered nickel-cobalt-manganese oxides and lithiated nickel-manganese oxides are compounds of the general formula Li₁₊ₓ(NiₐCo_{b}Mn_{c}M¹_{d})₁₋ₓO₂, with M¹ being selected from Mg, Ca, Ba, Al, Ti, Zn, Mo, Nb, V and Fe, the further variables being defined as follows:
zero ≤ x ≤ 0.2
0.50 ≤ a ≤ 0.99, preferably 0.60 ≤ a ≤ 0.90,
zero ≤ b ≤ 0.4, preferably zero < b ≤ 0.2
0.01 ≤ c ≤ 0.3, preferably 0.1 ≤ c ≤ 0.2
zero ≤ d ≤ 0.1,
and a + b + c + d = 1.

In a preferred embodiment, particulate electrode active materials are selected from compounds according to general formula (I)

(NiₐCo_{b}Mn_{c})_{1-d}M_{d} (I)

with
a being in the range of from 0.6 to 0.99, preferably 0.8 to 0.98
b being in the range of from 0.01 to 0.2, preferably 0.01 to 0.12
c being in the range of from zero to 0.2, preferably 0 to 0.1, and
d being in the range of from zero to 0.1, preferably 0 to 0.05,
M is at least one of Al, Mg, Ti, Mo, W and Nb, and
a + b + c = 1.
and the further variables are defined as above.

Examples of lithiated nickel-cobalt aluminum oxides are compounds of the general formula Li[NiₕCoᵢAlⱼ]O_{2+f}. Typical values for f, h, i and j are:
h is in the range of from 0.8 to 0.95,
i is in the range of from 0.015 to 0.19,
j is in the range of from 0.01 to 0.08, and
f is in the range of from zero to 0.4.

Particularly preferred are Li₍₁₊ₓ₎[Ni_{0.33}Co_{0.33}Mn_{0.33}]₍₁₋ₓ₎O₂, Li₍₁₊ₓ₎[Ni_{0.5}Co_{0.2}Mn_{0.3}]₍₁₋ₓ₎O₂, Li₍₁₊ₓ₎[Ni_{0.6}Co_{0.2}Mn_{0.2}]₍₁₋ₓ₎O₂, Li₍₁₊ₓ₎[Ni_{0.7}Co_{0.2}Mn_{0.1}]₍₁₋ₓ₎O₂, and Li₍₁₊ₓ₎[Ni_{0.8}Co_{0.1}Mn_{0.1}]₍₁₋ₓ₎O₂, each with x as defined above, and Li[Ni_{0.88}Co_{0.065}Al_{0.055}]O₂ and Li[Ni_{0.91}Co_{0.045}Al_{0.045}]O₂.

Some elements are ubiquitous. In the context of the present invention, traces of ubiquitous metals such as sodium, calcium, iron or zinc, as impurities will not be taken into account in the description of the present invention. Traces in this context will mean amounts of 0.02 mol-% or less, referring to the total metal content of the starting material.

In one embodiment of the present invention particles of particulate material such as lithiated nickel-cobalt aluminum oxide or layered lithium transition metal oxide, respectively, are cohesive. That means that according to the Geldart grouping, the particulate material is difficult to fluidize and therefore qualifies for the Geldart C region. In the course of the present invention, though, mechanical stirring is not required in all embodiments.

The particulate electrode active material has an average particle diameter (D50) in the range of from 2 to 20 µm, preferably from 2 to 15 µm, more preferably from 3 to 12 µm. The average particle diameter can be determined, e. g., by light scattering or LASER diffraction. The particles are usually composed of agglomerates from primary particles, and the above particle diameter refers to the secondary particle diameter.

In one embodiment of the present invention, said secondary particles are composed of agglomerated primary particles. Said primary particles may have a average particle diameter (D50) in the range of from 100 to 300 nm.

In one embodiment of the present invention, the particulate material has a specific surface, hereinafter also "BET surface", in the range of from 0.1 to 1.5 m²/g. The BET surface may be determined by nitrogen adsorption after outgassing of the sample at 200°C for 30 minutes or more and beyond this accordance with DIN ISO 9277:2010.

Said electrode active material is at least partially coated with a nanoparticulate zirconia or titania or hafnium oxide or alumina or niobium oxide or gallium oxide or tungsten oxide or molybdenum oxide species, for example with ZrO₂, TiO₂, HfO₂, Al₂O₃, Nb₂O₅, Ga₂O₃, MoO₃, or WO₃. Preferred are zirconia species. Said zirconia species may be water-free or moisture containing nanoparticulate zirconia. In this context, nanoparticulate shall mean that the average particle diameter of said nanoparticulate zirconia species is in the range of from 2 to 10 nm, preferably 3 to 5 nm, determined by transmission electron microscopy (TEM). Said zirconia may have reacted with lithium oxide or carbonate or hydroxide and thus contain some, e.g., Li₂ZrO₃.

In one embodiment of the present invention, said electrode active material is completely coated with said nanoparticulate zirconia species. That means that in, e.g., TEM pictures the entire surface of the secondary particles of said electrode active material appears to be covered with zirconia species. In an alternative embodiment, the secondary particles of said electrode active material are only partially covered, for example in an island-like appearance, the "islands" being covered parts of the surface of the secondary particles and the rest being uncovered, or the islands being non-covered parts. A complete coating is preferred.

In one embodiment of the present invention, said electrode active material is coated with a monolayer of nanoparticulate zirconia.

In one embodiment of the present invention, nanoparticulate species of zirconia amounts to in the range of from 0.1 to 2.0 % by weight of electrode active material according to general formula Li₁₊ₓTM₁₋ₓO₂, preferred are 0.2 to 1.0% by weight.

The term "at least partially coated" in the context with the present invention refers to at least 80% of the particles of a batch of particulate material being coated, and to at least 75% of the outer surface of each secondary particle being coated, for example 75 to 99.99 % and preferably 80 to 90%. Nanoparticulate zirconia species may be located at the outer surface of secondary particles and in the voids between primary particles of each secondary particle.

The average thickness of such coating may be very low, for example 0.1 to 10 nm. In other embodiments, the average thickness may be in the range of from 6 to 15 nm. In further embodiments, the average thickness of such coating is in the range of from 16 to 50 nm. The average thickness in this context refers to an average thickness determined mathematically by calculating the amount of zirconia species per particle surface in m² and assuming a 100% conversion in steps in zirconia deposition.

Without wishing to be bound by any theory, it is believed that non-coated parts of particles do not adhere to zirconia due to specific chemical properties of the particles, for example density of chemically reactive groups such as, but not limited to hydroxyl groups, oxide moieties with chemical constraint, or to adsorbed water.

Cathodes (A) comprise a cathode active material (a) in combination with conductive carbon (b) and solid electrolyte (C). Cathodes (A) further comprise a current collector, for example an aluminum foil or copper foil or indium foil, preferably an aluminum foil.

Examples of conductive carbon (b) are soot, active carbon, carbon nanotubes, graphene, and graphite, and combinations of at least two of the foregoing.

In a preferred embodiment of the present invention, inventive cathodes contain
(a) 70 to 96 % by weight cathode active material,
(b) 2 to 10 % by weight of conductive carbon,
(C) 2 to 28 % by weight of solid electrolyte,
percentages referring to the sum of (a), (b) and (C).

Said anode (B) contains at least one anode active material, such as silicon, tin, indium, silicon-tin alloys, carbon (graphite), TiO₂, lithium titanium oxide, for example Li₄Ti₅O₁₂ or Li₇Ti₅O₁₂ or combinations of at least two of the foregoing. Said anode may additionally contain a current collector, for example a metal foil such as a copper foil.

Inventive electrochemical cells further comprise
(C) a solid electrolyte comprising lithium, sulfur and phosphorus, hereinafter also referred to as electrolyte (C) or solid electrolyte (C).

In this context, the term "solid" refers to the state of matter at ambient temperature.

In one embodiment of the present invention, solid electrolyte (C) has a lithium-ion conductivity at 25 °C of ≥ 0.1 mS/cm, preferably in the range of from 0.1 to 30 mS/cm, measurable by, e.g., impedance spectroscopy.

In one embodiment of the present invention, solid electrolyte (C) comprises Li₃PS₄, yet more preferably orthorhombic β-Li₃PS₄.

In one embodiment of the present invention, solid electrolyte (C) is selected from the group consisting of Li₂S-P₂S₅, Li₂S-P₂S₅-LiI, Li₂S-P₂S₅-Li₂O, Li₂S-P₂S₅-Li₂O-LiI, Li₂S-SiS₂-P₂S₅-LiI, Li₂S-P₂S₅-ZₘSₙ wherein m and n are positive numbers and Z is a member selected from the group consisting of germanium, gallium and zinc, Li₂S-SiS₂-Li₃PO₄, Li₂S-SiS₂-Li_{y}PO_{z}, wherein y and z are positive numbers, Li₇P₃S₁₁, Li₃PS₄, Li₁₁S₂PS₁₂, Li₇P₂S₈I, and Li₇₋ᵣ₋₂ₛPS₆₋ᵣ₋ₛXᵣ wherein X is selected from chlorine, bromine, iodine, fluorine, CN, OCN, SCN, N₃ (azide) or combinations of at least two of the foregoing, preferably X is chlorine, and the variables are defined as follows:
0.8 ≤ r ≤ 1.7 and 0 ≤ s ≤ (-0.25 r) + 0.5.

A particularly preferred example of solid electrolytes (C) is Li₆PS₅Cl, thus, r = 1.0 and s = zero and X is chlorine.

In one embodiment of the present invention, electrolyte (C) is doped with at least one of Si, Sb, Sn. Si is preferably provided as element. Sb and Sn are preferably provided as sulfides.

In one embodiment of the present invention, inventive electrochemical cells comprise solid electrolyte (C) in a total amount of from 1 to 50 % by weight, preferably of from 3 to 30 % by weight, relative to the total mass of the cathode (A).

Inventive electrochemical cells further contain a housing.

Inventive electrochemical cells may be operated - charged and discharged - with an internal pressure in the range of from 0.1 to 300 MPa, preferably 1 to 100 MPa.

Inventive electrochemical cells may be operated at a temperature in the range of from -50°C to +200°C, preferably from -30°C to +120°C.

Inventive electrochemical cells show excellent properties even after multiple cycling, including very low capacity fading.

Inventive electrochemical cells show excellent properties even after multiple cycling, including very low capacity fading.

A further aspect of the present invention relates to a process for making inventive electrochemical cells, hereinafter also referred to as inventive process. The inventive process comprises the steps of
- (β): mixing an electrode active material (a) with carbon in electrically conductive form (b) and with a solid electrolyte (C) and, optionally, with a binder (c), and either
- (γ1): applying the mixture resulting from step (β) to a current collector, or
- (γ2): pelletizing the mixture resulting from step (β).

Electrode active material (a) and carbon in electrically conductive form (b) as well as solid electrolyte (C) have been described above.

Step (β) may be performed in a mill, for example a ball mill.

Step (β) may be performed in the presence of a solvent.

Step (γ1) may be performed with a squeegee, with a doctor blade, by drop casting, spin coating, or spray coating. Step (γ1) is preferably performed in the presence of a solvent.

Step (γ2) may be performed by compressing a dry powder in a die or in a mold. Step (γ2) is performed in the absence of a solvent. Preferably, pressure in the range of 50 MPa to 500 MPa is applied. A preferred suitable pressure is 375 MPa.

By the above steps, a cathode (A) is obtained.

In one embodiment of the present invention, the inventive process includes the manufacture of an electrode active material (a) by
- (α1): mixing a particulate electrode active material according to general formula Li₁₊ₓTM₁₋ₓO₂ wherein the variables are defined as above, and wherein said electrode active material has lithium carbonate on the surface, with a slurry or dispersion of nanoparticulate zirconia, followed by
- (α2): heat-treatment in the presence of an oxygen-containing gas, for example oxygen-enriched air or pure oxygen.

Step (α1) is preferably performed by subjecting particulate electrode active material according to general formula Li₁₊ₓTM₁₋ₓO₂ to a slurry or dispersion of a nanoparticulate zirconia species, for example by adding a slurry of a nanoparticulate zirconia species in an organic solvent to particulate electrode active material according to general formula Li₁₊ₓTM₁₋ₓO₂ or by adding particulate electrode active material according to general formula Li₁₊ₓTM₁₋ₓO₂ to a slurry of a nanoparticulate zirconia species in an organic solvent. In this context, such organic solvent are aprotic solvents such as, but not limited to ethers, cyclic or non-cyclic, cyclic and acyclic acetals, aromatic hydrocarbons such as toluene, non-aromatic cyclic hydrocarbons such as cyclohexane and cyclopentane, and chlorinated hydrocarbons.

Examples of cyclic acetals are 1,3-dioxane and in particular 1,3-dioxolane. Examples of acyclic acetals are 1,1-dimethoxyethane, 1,1-diethoxyethane, and diethoxymethane.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran ("THF") and 1,4-dioxane.

Examples of chlorinated hydrocarbons are dichloromethane, chloroform, and 1,2-dichloroethane.

Preferably, step (α1) is performed with a chlorinated hydrocarbon as solvent.

In one embodiment of the present invention, step (α1) is performed at a temperature in the range of from zero to 120°C, preferably 10 to 50°C. Preferably, step (α1) is performed at a temperature below the boiling point of the solvent.

In on embodiment of the present invention, the duration of step (α1) is in the range of from 1 second to 24 hours, preferably 60 seconds to 10 hours.

In one embodiment of the present invention, the residual moisture content of particulate electrode active material according to general formula Li₁₊ₓTM₁₋ₓO₂ before treatment according to step (α1) is in the range of from 50 to 2,000 ppm, preferably from 100 to 400 ppm. The residual moisture content may be determined by Karl-Fischer titration.

In one embodiment of the present invention, the extractable lithium content of particulate electrode active material according to general formula Li₁₊ₓTM₁₋ₓO₂ before treatment according to step (α1) is in the range of from zero to 10 % by weight of the total lithium content, preferably 0.1 to 3 % by weight. The extractable lithium content may be determined by dispersing electrode active material according to general formula Li₁₊ₓTM₁₋ₓO₂ before treatment according to step (α1) in a pre-determined amount of aqueous HCI, for example in a pre-determined amount of aqueous 0.1 M HCI, followed by titration with base.

In one embodiment of the present invention, step (α1) is performed at 15 to 45°C, preferably 20 to 30% by weight, even more preferably at ambient temperature.

In one embodiment of the present invention, step (α1) has a duration in the range of from 10 to 60 minutes, preferably 20 to 40 minutes.

Said dispersion or slurry preferably contains at least one surfactant, preferably at least one anionic surfactant. Suitable anionic surfactants are sulfonic acids with linear C₁₀-C₂₀-alkyl groups and especially fatty acids such as, but not limited to stearic acid, palmitic acid, linoleic acid, oleic acid, myristic acid, and their respective alkali metal salts.

In one embodiment, nanoparticulate zirconia species is combined with at least one further nanoparticulate oxide selected from TiO₂, Nb₂O₅, MoO₃, Al₂O₃, Ga₂O₃, SnO₂, SiO₂, WO₃, Sb₂O₃, ZnO, MgO or HfO₂, for example in a weight ratio zirconia to further nanoparticulate oxide from 100:1 to 50:50.

Step (α1) may be performed in any type of vessel that is suitable for mixing, for example stirred tank reactors. On laboratory scale, beakers and round-bottom flasks are suitable as well.

By said mixing nanoparticulate zirconia species is deposited on the secondary particles of electrode active material according to general formula Li₁₊ₓTM₁₋ₓO₂.

After completion of step (α1) solvent may be removed by evaporation or by a solid-liquid separation method, for example by decanting or by filtration. In embodiments were a filtration is applied, the resulting filter cake may be dried, for example at reduced pressure and at a temperature in the range of from 50 to 120°C.

In one embodiment of the present invention, step (α2) is performed at a temperature in the range of from 150 to 600°C, preferably 300 to 500°C, even more preferably 350 to 450°C.

In one embodiment of the present invention, step (α2) is performed under air, oxygen-enriched air or pure oxygen as oxygen-containing gas.

In one embodiment of the present invention, step (α2) has a duration in the range of from 1 second to 24 hours, preferably 10 minutes to 10 hours.

In one embodiment of the present invention, step (α2) is performed in a rotary kiln, in a rotary hearth kiln or in a pusher kiln. In laboratory scale embodiments, step (α2) may be performed in an oven such as a muffle oven or in a tube furnace.

The inventive process may further comprise the following steps:
providing an anode (B) and a solid electrolyte (C),
and assembling cathode (A), anode (B) and a solid electrolyte (C) in a housing, optionally with a separator. Preferably, an extra layer of solid electrolyte (C) may serve as separator, and no separators such as ethylene-propylene copolymers are required.

However, it is preferred to first combine solid electrolyte (C) with a cathode active material (a), for example by mixing or milling, in a mixer or in an extruder. Then, anode (B) and, if applicable, a separator is added and the combined cathode (A), anode (B) and a solid electrolyte (C) as separator are arranged in a housing.

It is even more preferred to first combine some solid electrolyte (C) with a cathode active material (a), for example by co-milling and subsequent compression, and separately combining an anode active material with solid electrolyte (C) and conductive carbon, for example by co-milling and subsequent compression, and to then combine a layer of the above cathode (A) and a layer of anode (B) and a further layer of solid electrolyte (C) under a pressure of from 1 to 450 MPa, preferably of from 50 to 450 MPa and more preferably of from 75 to 400 MPa.

A further aspect of the present invention relates to cathodes (A) comprising
(a) a particulate electrode active material according to general formula Li₁₊ₓTM₁₋ₓO₂, wherein TM is Ni and, optionally, at least one of Co and Mn, and, optionally, at least one element selected from Al, Mg, Ba and B, transition metals other than Ni, Co, and Mn, and x is in the range of from zero to 0.2, wherein at least 50 mole-% of the transition metal of TM is Ni, wherein the particles of said electrode active material are at least partially coated with a nanoparticulate zirconia species and wherein said particulate electrode active material has an average particle diameter (D50) in the range of from 2 to 20 µm,
(b) carbon in electrically conductive form, and
(C) a solid electrolyte comprising lithium, sulfur and phosphorus.

Particulate electrode active material (a), carbon (b) and solid electrolyte (C) have been described above.

Optionally, a binder (c) may be present. Optionally, a current collector may be present.

Inventive cathodes (A) and all-solid-state batteries containing them exhibit good discharge specific capacities and most importantly improved capacity retention during cycling.

The invention is further illustrated by working examples.

Percentages are % by weight unless specifically noted otherwise.

### I. Manufacture of a cathode active material

(b.1): Super C65, TIMCAL
(C.1): Li₆PS₅Cl, available from NEI
rpm: revolutions per minute

### 1.1 Providing a precursor for cathode active materials

As TM-OH.1, a co-precipitated hydroxide of Ni, Co and Mn was used, molar ratio Ni:Co:Mn 8.5 : 1 : 0.5, spherical particles, average particle diameter (D50) 3.52 µm, (D90) 5.05 µm, determined by LASER diffraction, uniform distribution of Ni, Co and Mn.

### 1.2. Manufacture of a non-treated cathode active material

B-CAM.1 (Comparative): TM.1-OH was mixed with LiOH monohydrate to obtain a Li/TM molar ratio of 1.02. The mixture was heated to 760°C and kept for 10 hours in a forced flow of a mixture of 60% oxygen and 40% nitrogen (by volume). After cooling to ambient temperature, the powder was deagglomerated and sieved through a 32 µm mesh to obtain the base electrode active material B-CAM 1.

The D50 of the electrode active material B-CAM.1 was 3.5 µm, determined using the technique of LASER diffraction in a Mastersize 3000 instrument from Malvern Instruments. Residual moisture at 250 °C was determined to be 650 ppm.

### 1.3 Manufacture of nanoparticulate zirconia:

A microwave vial (10 ml) was charged with zirconium(IV) isopropoxide isopropanol complex (230 mg) followed by addition of 4.5 mL of benzyl alcohol and sealing with a Teflon cap. After 10 min of stirring at ambient temperature (RT), the as-prepared solution was subjected to a two-step microwave treatment using a Discover SP CEM microwave: in a initial step at 60 °C for 5 min and in a second step a treatment at 280 °C for 5 h. The initially clear solution converted to a white precipitate and an organic supernatant. The white precipitate was isolated through centrifugation (2500 rpm, 2 min) and washed three times with diethyl ether. The white powder so obtained was not dried but instead a chloroform solution of oleic acid (50 mg in 10 mL chloroform, with the oleic acid acting as a surfactant) was added immediately after the decantation of diethyl ether. Upon stirring overnight, a transparent dispersion of nanoparticulate ZrO₂ was formed with a solid contents of about 60 mg mL⁻¹. The ZrO₂ nanoparticles had an average diameter of 4 nm as determined by TEM.

### II. Manufacture of inventive cathode active materials

### 11.1 Manufacture of inventive CAM.1, step (α1.1)

An amount of 2 g of B-CAM.1 was mixed with a certain volume one ml of dispersion according to 1.3 dispersion in a beaker followed by adding 20 mL pure chloroform. After sonication for 30 min, the as-prepared suspension was dried at 60 °C with a mild stirring and the remaining solid powder was vacuum-dried at ambient temperature for 12 hours. Subsequently, it was transferred to a tube furnace and heated at 400 °C for 2 h (heating rate: 5 °C min⁻¹) under a flow of pure oxygen. The resulting product was collected, inventive CAM.1.

### 11.2 Manufacture of inventive CAM.2, CAM.3 and CAM.4

The protocol of step (α.1) was repeated but higher amounts of dispersion from 1.3 was used. The relevant data are collected in Table 1.

**Table 1: Data from CAM.1 to CAM.4 and B-CAM.1**

| | (α1): ml of dispersion from I.3 | % by weight of ZrO₂ | Cathode | Specific capacity (mA·h/g) | Coulombic efficiency (%) |
|---|---|---|---|---|---|
| B.CAM.1 | Zero | - | C-(A.5) | 179.5 | 81.8 |
| CAM.1 | 1 | 0.22 | (A.1) | 184.6 | 86.0 |
| CAM.2 | 2 | 0.39 | (A.2) | 189.7 | 88.1 |
| CAM:3 | 3 | 0.80 | (A.3) | 201.3 | 88.5 |
| CAM.4 | 4 | 0.92 | (A.4) | 198.6 | 88.7 |

### III Electrode manufacture, cell manufacture and testing

### 111.1 Electrode manufacture

A cathode composition was made by mixing 70% of B-CAM.1, CAM.1, CAM.2, CAM.3 or CAM.4 with 30 wt% (C.1), followed by addition of 1 wt% (b.1), said 1% referring to the sum of cathode active material and (C). For the cathode composite preparation, the active material was mixed under an argon atmosphere with (b.1) and (C.1) using a planetary ball milling (Fritsch) at 140 rpm for 30 min (ten ZrO₂ balls with a diameter of 10 mm). In the cases of CAM.1, CAM.2, CAM.3 and CAM.4, inventive cathodes (A.1), (A.2), (A.3) or (A,.4) were obtained. In the case of B-CAM.1, a comparative cathode C-(A.5) was obtained.

An anode composition was made by mixing 30 wt% carbon-coated Li₄Ti₅O₁₂ (NEI), 60 wt% (C.1), and 10 wt% (b.1) in a planetary ball mill. An anode composition (B.1) was obtained.

### 111.2 Cell manufacture

For manufacture of solid-state electrochemical cells, an amount of 100 mg (C.1) was compressed at a pressure of 125 MPa to form a solid electrolyte pellet, then 65 mg anode (B.1) was pressed to the solid electrolyte pellet at 125 MPa, and either 11 to 12 mg cathode (A.1) to (A.4) or 12 mg comparative cathode C-(A.5) were pressed onto the other side at 375 MPa. The pellet so obtained was compressed in a cylindrical case composed of polyetheretherketone (PEEK) between two stainless steel rods. An electrochemical cell was obtained.

### 111.3 Cell testing

The electrochemical testing was done in a custom-made two-electrode cell, including two stainless steel dies and a PEEK sleeve with an inner diameter of 10 mm. First, Li₆PS₅Cl (100 mg) solid electrolyte was pressed at a pressure of 0.5 t. Then, cathode composite (-12 mg) was pressed at 3.5 t onto the solid electrolyte pellet, followed by pressing the anode composite (65 mg) onto the other side. A stable pressure of 55 MPa was maintained during electrochemical cycling. Galvanostatic dis-/charge and rate capability measurements were performed with a Maccor 3000 battery tester at 45 °C. The cutoff voltages of as-assembled cells were 1.35 and 2.75 V with respect to Li₄Ti₅O₁₂/Li₇Ti₅O₁₂, and 1.0C is equal to 190 mA g_{NCM}⁻¹. The results are summarized in Table 2.

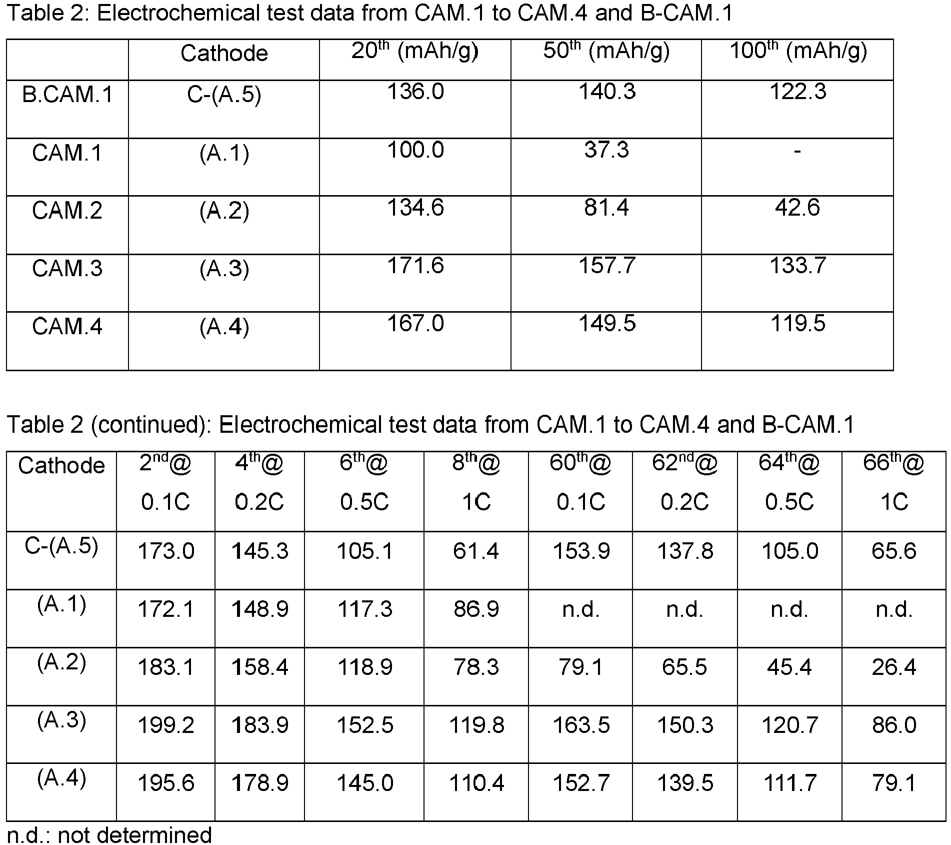

## Claims

1. All-solid-state lithium ion electrochemical cell comprising
(A) a cathode comprising
(a) a particulate electrode active material according to general formula Li₁₊ₓTM₁₋ₓO₂, wherein TM is Ni and, optionally, at least one of Co and Mn, and, optionally, at least one element selected from Al, Mg, and Ba, transition metals other than Ni, Co, and Mn, and x is in the range of from zero to 0.2, wherein at least 50 mole-% of the transition metal of TM is Ni, wherein said electrode active material is at least partially coated with a nanoparticulate zirconia or titania or hafnium oxide or alumina or niobium oxide or gallium oxide or tungsten oxide or molybdenum oxide species and wherein said particulate electrode active material has an average particle diameter (D50) in the range of from 2 to 20 µm,
(B) an anode, and
(C) a solid electrolyte comprising lithium, sulphur and phosphorus.

2. Electrochemical cell according to claim 1 wherein TM is a combination of metals according to general formula (I)
(NiₐCo_{b}Mn_{c})_{1-d}M_{d} (I)
with
a being in the range of from 0.6 to 0.99,
b being in the range of from 0.01 to 0.2,
c being in the range of from zero to 0.2, and
d being in the range of from zero to 0.1,
M is at least one of Al, Mg, Ti, Mo, W and Nb, and
a + b + c = 1.

3. Electrochemical cell according to claim 1 or 2 wherein electrolyte (C) has a lithium-ion conductivity at 25 °C of ≥ 0.15 mS/cm.

4. Electrochemical cell according to any of the preceding claims wherein electrolyte is a compound corresponding to formula (II)
Li₇₋ᵣ₋₂ₛPS₆₋ᵣ₋ₛXᵣ (II),
wherein
X is chlorine, bromine, iodine, fluorine, CN, OCN, SCN, N₃, or combinations of at least two of the foregoing,
0.8 ≤ r ≤ 1.7 and s 0 ≤ s ≤ (-0.25 r) + 0.5, or
- Li₃PS₄.

5. Electrochemical cell according to any of the preceding claims wherein the electrode active material has a content of extractable lithium in the range of from 0.1 to 0.6 % by weight, determined by titration.

6. Electrochemical cell wherein electrolyte (C) is Li₆PS₅Cl.

7. Process for making an all-solid-state lithium-ion electrochemical cell according to any of the preceding claims wherein said process comprises the steps of
(β) mixing an electrode active material (a) with carbon in electrically conductive form and electrolyte (C), and either
(γ1) applying the mixture resulting from step (β) to a current collector, or
(γ2) pelletizing the mixture resulting from step (β).

8. Process according to claim 7, wherein said process includes the manufacture of an electrode active material (A) by subjecting particulate electrode active material according to general formula Li₁₊ₓTM₁₋ₓO₂ to a nanoparticulate zirconia or titania or hafnium oxide or alumina or niobium oxide or gallium oxide or tungsten oxide or molybdenum oxide species, followed by thermal treatment at a temperature from 150 to 600°C.

9. Cathode (A) comprising
(a) particulate electrode active material according to general formula Li₁₊ₓTM₁₋ₓO₂, wherein TM is Ni and, optionally, at least one of Co and Mn, and, optionally, at least one element selected from Al, Mg, and Ba, transition metals other than Ni, Co, and Mn, and x is in the range of from zero to 0.2, wherein at least 50 mole-% of the transition metal of TM is Ni, wherein the particles of said electrode active material are at least partially coated nanoparticulate zirconia or titania or hafnium oxide or alumina or niobium oxide or gallium oxide or tungsten oxide or molybdenum oxide species and wherein said particulate electrode active material has an average particle diameter (D50) in the range of from 2 to 20 µm,
(b) carbon in electrically conductive form, and
(C) a solid electrolyte comprising lithium, sulphur and phosphorus.

10. Cathode (A) according to claim 9, wherein said cathode additionally comprises a binder.

11. Particulate electrode active material according to general formula Li₁₊ₓTM₁₋ₓO₂, wherein TM is Ni and, optionally, at least one of Co and Mn, and, optionally, at least one element selected from Al, Mg, and Ba, transition metals other than Ni, Co, and Mn, and x is in the range of from zero to 0.2, wherein at least 50 mole-% of the transition metal of TM is Ni, wherein the particles of said electrode active material are at least partially coated with a nanoparticulate zirconia or titania or hafnium oxide or niobium oxide or gallium oxide or tungsten oxide or molybdenum oxide species and wherein said particulate electrode active material has an average particle diameter (D50) in the range of from 2 to 20 µm.

12. Particulate electrode active material according to claim 11 wherein the particles are covered with a monolayer of the nanoparticulate zirconia species.

13. Process for making a particulate electrode active material according to claim 11 or 12 wherein said process includes the steps of
(α1) mixing a slurry or dispersion of an electrode active material according to general formula Li₁₊ₓTM₁₋ₓO₂, wherein TM is Ni and, optionally, at least one of Co and Mn, and, optionally, at least one element selected from Al, Mg, and Ba, transition metals other than Ni, Co, and Mn, and x is in the range of from zero to 0.2, wherein at least 50 mole-% of the transition metal of TM is Ni, and wherein said electrode active material has lithium carbonate on the surface, with nanoparticulate zirconia ,
(α2) heat-treating the resultant mixture at a temperature of from 150 to 600°C.

14. Process according to claim 13 wherein step (α1) is performed in the presence of a chlorinated hydrocarbon.

15. Process according to claim 13 or 14 wherein said electrode active material according to general formula Li₁₊ₓTM₁₋ₓO₂ contains in the range of from 0.1 to 3% by weight lithium carbonate on the surface.
